Europäisches Patentamt

European Patent Office

Office européen des brevets

(11) Publication number: 0 216 040
A2

## (12) EUROPEAN PATENT APPLICATION

(21) Application number: 86109251.8

(22) Date of filing: 07.07.86

(51) Int. Cl.⁴: G01L 5/24

(30) Priority: 26.09.85 US 780472

(43) Date of publication of application:
01.04.87 Bulletin 87/14

(84) Designated Contracting States:
DE FR GB IT SE

(71) Applicant: ALLIED CORPORATION
Columbia Road and Park Avenue P.O. Box
2245R (Law Dept.)
Morristown New Jersey 07960(US)

(72) Inventor: Wakeman, Russell John c/o ALLIED
CORPORATION
20650 Civic Center Drive P.O. Box 5060
Southfield Michigan(US)

(74) Representative: Brullé, Jean et al
Service Brevets Bendix 44, rue François 1er
F-75008 Paris(FR)

(54) Torque sensor.

(57) A torque sensor (10) for measuring the torque applied to the steering mechanism of a motor vehicle, transmits the torque readings without the use of wrap around cables. The sensor (10) utilizes a planetary gear means (16) for the transmital of the torque from the input shaft (12) to the output shaft - (30). The internal gear (24) is held stationary by a pair of flexure blades (52) each having a strain gage (50) bonded thereto. The amount of flex in the flexure blades (52) is proportional to the amount of torque applied by the input shaft (12) and the electrical change in the strain gages (50) is proportional to the amount of torque. An amplifier means including scaling means (48) responds to the electrical change in the strain gages (50) and generates electrical signals in proportion to the torque applied.

FIG. I

# TORQUE SENSOR

## Field of the Invention

This invention relates to torque sensors in general and more particularly to a torque sensor for use in measuring the amount of torque applied to the steering mechanism of a motor vehicle by the motor vehicle operator.

## Background of the Invention

In electric power steering systems for motor vehicles, one means for measuring the amount of steering of the motor vehicle is to measure the amount of torque applied to the steering shaft. The steering shaft is coupled to the steering rack by means of a pinion and in proportion to the amount of steering applied by the operator, the pinion rotates moving the rack, hence the wheels.

It is a well established practice to use torque sensors mounted in line with the steering shaft to measure the amount of steering applied by the operator. Since the steering shaft rotates, a wrap around cable must be provided to transmit electrical signals generated by the torque sensor. With the rotation of the steering shaft being numbered in whole revolutions, such as four from one extreme position to the other, the wrap around cable is continuously wound and unwound putting great stress on the cable.

It is a principal advantage of the present torque sensor to have a torque sensor for a steering shaft without the necessity of having a wrap around cable. It is another advantage of the present torque sensor, to eliminate the use of slip rings on the shaft providing electrical connections for a cable and thereby provide for improved signal to noise ratio signals.

These and other advantages will become apparent from the torque sensor as described herein for measuring the amount of torque applied by the vehicle operator to the steering mechanism. The torque sensor has a planetary gear system having a pair of planet gears mounted on a planet carrier for meshing with a sun gear and an internal gear. The steering shaft or input shaft is connected to the planet carrier. The output shaft means or pinion shaft is connected to the sun gear. The internal gear housing supports the internal gear and operates to hold the internal gear stationary. Flexure means radially extends from the internal gear housing for holding the internal gear housing stationary.

A pair of strain gages are mounted on the flexure means and are responsive to flexing stress applied to said flexure means in response to the torque applied by the rotation of the input shaft.

These and other advantages will become apparent from the following detailed description taken in conjunction with the drawings.

## Detailed Description of the Drawings:

In the drawings:

FIGURE 1 is a sectional view taken along the longitudinal axis of the torque sensor as applied to a steering mechanism in a motor vehicle.

FIGURE 2 is a transverse sectional view taken along line 2-2 of FIGURE 1 with the full cross-section developed.

## Detailed Description of the Preferred Embodiment:

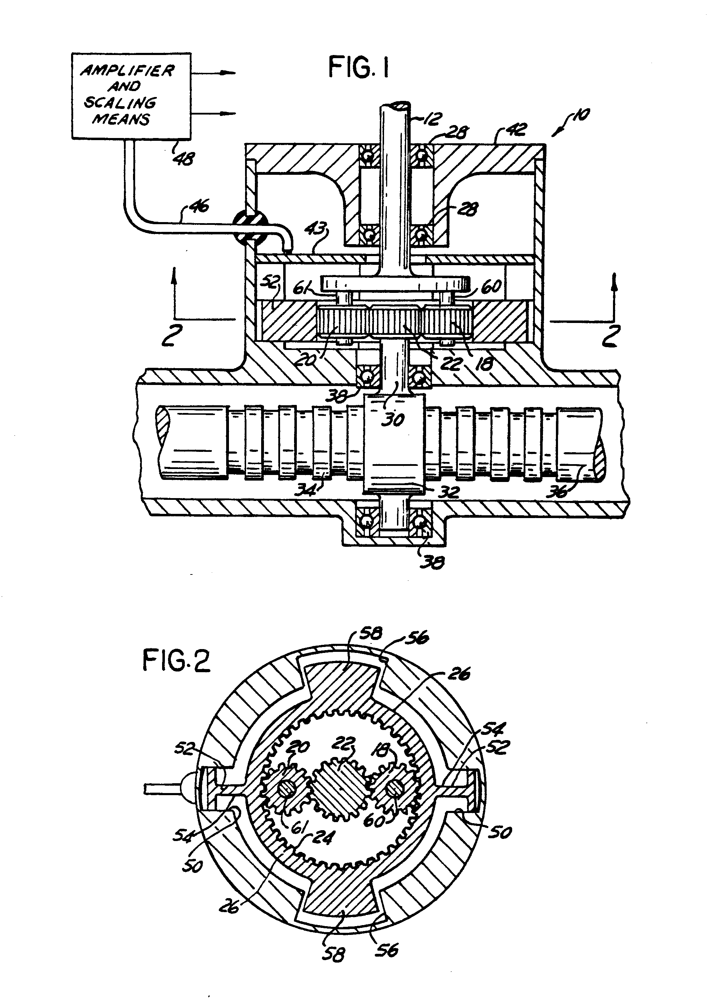

FIGURE 1 is a sectional view of the torque sensor assembly as may be found in the steering system of a motor vehicle. The present torque sensor 10 may be used in an electric power steering system to measure the amount of turning the vehicle operator applies to the steering wheel as measured through the steering shaft.

In FIGURE 1, the torque is applied to the steering mechanism of a motor vehicle by the operator through the input shaft 12. The input shaft 12 terminates at the planet carrier or torque transmitting means 14 in a planetary gear means 16 having a pair of planet gears 18,20, a sun gear 22, an internal or ring gear 24 and internal gear housing 26. The input shaft 12 is received in the sensor 10 housing by bearing means 28 illustrated as a pair of bearings.

The output shaft or pinion shaft 30 is connected to the sun gear 22 and, as illustrated, supports a pinion 32 which meshes with a rack 34 on a steering shaft 36. The output shaft 30 is located by bearing means 38 illustrated or a pair of bearings, to maintain its alignment with the steering rack 34 and the planet gears 18,20.

In the preferred embodiment, the sensor housing 40 is enclosed at one end by a bearing carrier 42 supporting the bearing means 28 for the input shaft 12. Positioned within the sensor housing 40 is a signal conditioning means 43 mounted on a substrate or a circuit board 44. Attached to the substrate are a plurality of wires 46 for supplying power to and conducting signals from an amplifier and scaling means 48. The sensor housing may also be a part of a housing enclosing the rack.

Referring to FIGURE 2, the cross section of the sensor housing 40 shows a pair of diagonally opposed slots 50 receiving a pair of flexure means or flexible blades 52 radially extending from the internal gear housing 26. The flexure blades 52 function to hold the internal gear housing 26 stationary. Mounted on each of the flexure blades 26 is a strain gage means 54 which is responsive to the flexing stress applied to the flexure blades 52 in response to the torque of the input shaft 12 as transferred through the plane gears 18,20.

The sensor housing 40 in addition has a pair of openings 56 which receive a pair of tangs 58 radially extending from the internal gear housing 26. The cooperation between the pair of tangs 58 in the preferred embodiment and the openings 56 function as a failsafe limit for the torque sensor 10 in that an excessive amount of torque will cause the tangs 58 to abut against the edge of the openings 56 and will not allow internal gear housing 26 to rotate beyond a predetermined limit.

The flexure blades 52 are held tight in the slots 50 and as the input shaft 12 is turned, the force or the torque transmitted through the input shaft 12 to the planet gears 18,20 is transmitted through the flexure blades 52 to the sensor housing 40. Since the flexure blades 52 are tightly held at one end, the torque will operate to rotate the internal gear housing 40 causing the flexure blades 52 to bend. The amount of bending causes the strain gages 54 to change their length. The amplifier means 48 contains scaling means responding to the spring constant of the flexure blades 52 and the gear ratios of the planetary gear means 16 to generate electrical signals proportional to the amount of torque applied to the input shaft 12 to the output shaft 30.

Operation:

As the input shaft 12 is rotated, the planet gears 18,20 which are rotatively mounted on a pair of shafts 60,61 from the planet carrier 14, rotate the sun gear 22. Rotation of the sun gear 22 will in turn cause the output shaft 30 and the pinion gear to rotate causing the rack 34 to move. In any planetary gear system, one of the gears must be constrained from rotating if the system is to transmit any useful work. In this sensor, the internal gear housing 26, which is fixedly attached to the internal gear 24, is the element which is not free to rotate.

The flexure blades 52, which are radially entending from the internal gear housing 26 will bend as the planet gears 18,20 attempt to rotate the internal gear 24.

The internal gear housing 26 further provides a failsafe means to prevent overloading of the sensor 10. The failsafe means is the pair of tangs 58 which are positioned within a pair of openings 56 in the sensor housing 40. If the sensor 10 is overloaded, the tangs 58 will abut against the sides of the openings 56 and the input shaft 12 will be prevented from overstressing the flexure blades 52. The gears will continue to transmit motion normally in this overstress position.

The input shaft 12 enters the sensor housing 40 through a pair of bearings 28 to accurately locate the input shaft 12 under heavy torque input. The planet gears 18,20, of which there are two in the preferred embodiment, are mounted to the planet carrier 14 and are equally and angularly spaced about the sun gear 22. By such a construction, the planet gears 18,20 cancel out any radial forces which reduces the load on the input 12 and the output 30 shafts.

The sensor housing 40 is a sealed unit protecting the torque sensor 10 from external contamination. With the signal conditioning means located within the housing 40, shielding means can be provided to protect the small signals from the strain gages 54 from extraneous signal noise. With the signal conditioning means fixed in location and the strain gage sensors 54 fixedly attached to the internal gear housing 26, there is no requirment for a wrap around cable and the resultant concern for breakage. Likewise, there is no requirement for slip rings on the input shaft 12.

There has thus been shown and described a torque sensor 10 as may be used in electric power steering systems. The torque sensor 10 utilizes a planetary gear means 16 to transmit the input torque to the sensor into electrical signals through the use of strain gage means 54 attached to flexure blades 52 holding the internal gear housing 26 hence the internal gear stationary.

**Claims**

1. A torque sensor comprising:

an input shaft (12);

an output shaft (30);

bearing support means (28, 38) for supporting each of said input shaft (12) and said output shaft (30);

a pair of planet gears (18,20) connected to said input shaft (12);

a sun gear (22) connected to said output shaft (30) and meshed with said pair of planet gears (18,20);

a ring gear (24) concentric with said sun gear (22) and meshing with said pair of planet gears (18,20);

ring gear support means (26) having diametrically opposed, radially extending flexible blades (52) and radially extending tangs (58) extending away from said ring gear (24), said tangs (58) angularly spaced from said flexible blades (52);

housing means (40) enclosing said planet gears, sun gear and ring gear support means and supporting said bearing support means, said housing means having a pair of oppositely opposed slots - (50) means for receiving said flexible blades (52) and openings (56) for receiving said tangs (50); and

strain gage means (54) bonded to each of said flexible blades (52), said strain gage means operable to change its length in proportion to the amount of torque applied to said output shaft (30) from said input shaft (12).

2. A torque sensor according to Claim 1 additionally including amplifier means (48) responsive to the change in length of said strain gage means for generating electrical signals in proportion thereto.

3. A torque sensor according to Claim 2 wherein said amplifier means (48) additionally includes scaling means responsive to the spring constant of said flexible blades (52) and the gear ratios of said planet gears (18,20), sun gear (22) and internal gear (24) for generating electrical signals proportional to the amount of torque applied by said input shaft (12) to said output shaft (30).

4. A torque sensor (10) for measuring the amount of torque applied by a vehicle operator to the steering mechanism of the vehicle, the torque sensor comprising:

input shaft means (12) for receiving the torque applied by the operator;

output shaft means (30) including pinion gear means (32) operatively coupled to the steering mechanism (34) of the vehicle;

a sun gear (22) concentric with said input shaft means (12) and operatively coupled to said output shaft means (30);

at least one pair of planet gears (18,20) connected to said input shaft means (12) and operatively connected to said sun gear (22), each one of said pair of planet gears being positioned 180° from the other one of said pair of planet gears;

torque transmitting means (14) operatively connected to said planet gears and responding to the rotation of said input shaft means (12);

internal gear means (14) meshing with said planet gears;

internal gear housing means (26) supporting said internal gear means;

flexure means (52) attached to said internal gear housing means (26) and operative to hold said internal gear housing means stationary;

sensing means (54) responsive to the bending of said flexure means (52) for generating signals indicating the amount of bending of said flexure means; and

amplifier means (48) responsive to said sensing means and operative to generate signals representative of the amount of torque applied to said internal gear housing (26) means by said planet gears (18,20).

5. A torque sensor (10) for measuring the amount of torque applied by the vehicle operator to the steering mechanism, the sensor comprising:

planetary gear means (18,20,22,24) having planet gears (18,20) mounted on a planet carrier (14), a sun gear (22) and an internal gear (24);

input shaft means (12) connected to the planet carrier (14);

output shaft means (30) connected to the sun gear (22);

internal gear housing means (26);

flexure means (52) radially extending from said internal gear housing means (26) for holding said internal gear housing means stationary; and

strain gage means (52) mounted on said flexure means (52) and responsive to flexing stress applied to said flexure means in response to rotation of said input shaft.

6. A torque sensor (10) according to Claim 5 additionally including amplifier means (48) connected to said strain gage means and operative to receive signals from said strain gage means (54) and to generate electrical signals proportional to the torque applied by said input shaft means (12) to said output shaft means (30).

7. A torque sensor (10) according to Claim 5 wherein said planetary gear means includes two planet gears (18,20) equally spaced.

8. A torque sensor (10) according to Claim 7 additionally including bearing means (28) for aligning said input shaft (12) with said sun gear (22).

9. A torque sensor (10) according to Claim 5 additionally including fail safe means (58) for limiting the torque response of said internal gear housing means (26).

10. A torque sensor (10) according to Claim 9 wherein said fail safe means on said internal gear housing means (26) comprises at least one tang - (58) radially extending therefrom, said tang for limiting the rotational response of said internal gear housing (26) to the rotation of said input shaft (12).

FIG. I

AMPLIFIER
AND
SCALING
MEANS

FIG·2